# EUROPÄISCHE PATENTSCHRIFT

(11) **EP 4 551 413 B1**
(45) Veröffentlichungstag und Bekanntmachung des Hinweises auf die Patenterteilung: **25.02.2026**
(21) Anmeldenummer: 23731949.6
(22) Anmeldetag: 05.06.2023
(51) Int. Cl.: B60C 11/13, B60C 19/00

(54) **FAHRZEUGLUFTREIFEN**
PNEUMATIC TIRE
PNEUMATIQUE

(30) Priorität: 08.07.2022 DE 102022206991
(43) Veröffentlichungstag der Anmeldung: 14.05.2025
(73) Patentinhaber: Continental Reifen Deutschland GmbH, 30175 Hannover (DE)
(72) Erfinder: BEHR, Ulrich, 30175 Hannover (DE)
(74) Vertreter: Continental Corporation
(86) Internationale Anmeldenummer: PCT/DE2023/200112
(87) Internationale Veröffentlichungsnummer: WO 2024/008242

(56) Entgegenhaltungen:
- EP-A1- 3 789 214
- CN-A- 103 738 121
- CN-A- 111 873 719
- DE-A1- 102009 003 592
- DE-A1- 102015 225 941

## Beschreibung

Die Erfindung betrifft einen Fahrzeugluftreifen mit einem profilierten Laufstreifen mit zumindest einer in Draufsicht insbesondere gerade in Umfangsrichtung verlaufenden Umfangsrille mit einem Rillengrund und zwei Rillenflanken, wobei am Rillengrund über den Umfang des Laufstreifens verteilt angeordnete, als Schallbrecher wirkende Vorsprünge ausgebildet sind, wobei jeder Vorsprung eine in Draufsicht in Erstreckungsrichtung der Umfangsrille verlaufende erste Symmetrieebene sowie eine in Draufsicht senkrecht zur ersten Symmetrieebene verlaufende zweite Symmetrieebene aufweist und wobei sich jeder Vorsprung aus einem mittig in der Umfangsrille ausgebildeten, zentralen Vorsprungteil und zwei den Rillenflanken zugewandten seitlichen Vorsprungteilen zusammensetzt.

Es ist bekannt, dass am Laufstreifen von Fahrzeugluftreifen ausgebildete, in Umfangsrichtung gerade verlaufende Umfangsrillen besonders vorteilhaft für das Wasserdrainagevermögen und daher für die Aquaplaningperformance des Reifens sind. Um während des Fahrbetriebes die Ausbreitung von sich vor allem in gerade verlaufenden Umfangsrillen ausbildenden Schallwellen, deren Frequenzen in einem für Menschen wahrnehmbaren Bereich liegen, zu unterdrücken, ist es üblich, in den Umfangsrillen als Schallbrecher ("Noise Breaker") wirkende Vorsprünge auszubilden, welche jedoch das Wasserdrainagevermögen beeinträchtigen.

Ein Reifen eingangs genannter Art ist beispielweise aus der WO 2010/102 683 A1 bekannt. Der Laufstreifen dieses Reifens weist Umfangsrillen mit am Rillengrund ausgebildeten Vorsprüngen auf, welche sich gemäß einem Ausführungsbeispiel jeweils aus einem mittig in der Umfangsrille positionierten zentralen Vorsprungteil und zwei den Rillenflanken zugewandten seitlichen Vorsprungteilen zusammensetzen. Die Vorsprungteile weisen jeweils die Kontur einer kreiszylindrischen Mantelfläche auf, wobei der Mantelfläche der seitlichen Vorsprungteile ein größerer Radius zugrunde liegt als der Mantelfläche des zentralen Vorsprungteiles. Fahrzeugluftreifen mit einem Laufstreifen mit derart ausgeführten Vorsprüngen sollen ein reduziertes Reifen-Fahrbahn-Geräusch und gute Aquaplaningeigenschaften aufweisen.

Weitere Fahrzeugluftreifen mit Umfangsrillen sind offenbart in der CN 103738121 A, CN 111873719 A, DE 102009003592 A1, DE 102015225941 A1, EP 3789214 A1 and WO 2010102683 A1.

Der Erfindung liegt die Aufgabe zugrunde, bei einem Fahrzeugluftreifen der eingangs genannten Art unter Aufrechterhaltung der die Schallausbreitung der Vorsprünge unterdrückenden Wirkung im Bereich der Vorsprünge das Wasserdrainagevermögen der Umfangsrille weiter zu verbessern.

Gelöst wird die gestellte Aufgabe erfindungsgemäß dadurch,
dass der zentrale Vorsprungteil, in Draufsicht betrachtet, eine in Erstreckungsrichtung der ersten Symmetrieebene langgestreckt ovale Form, insbesondere eine in Erstreckungsrichtung der ersten Symmetrieebene langgestreckt elliptische Form, aufweist und
in Gestalt eines Teilstückes eines in radialer Richtung zentrisch abgeflachten Ovoids, insbesondere eines Ellipsoids, ausgeführt ist,
wobei die seitlichen Vorsprungteile gegenüber dem zentralen Vorsprungteil jeweils ein kleineres Volumen aufweisen, nasenförmig ausgebildet sind und einen ausgehend vom zentralen Vorsprungteil abfallenden Nasenrücken aufweisen.

Der zentrale Vorsprungteil wird beim Fahren auf nasser Fahrbahn, bedingt durch seine Gestalt, auf besonders verwirbelungsarme Weise von Wasser um- und überströmt und sorgt, ebenfalls auf besonders verwirbelungsarme Weise, für eine Teilung der Wasserströmung. Da der zentrale Vorsprungteil zentrisch abgeflacht ist, bleibt ein für die Wasserdrainage vorteilhaft großer Rillenquerschnitt im Bereich des Vorsprunges erhalten. Die Vorsprünge weisen - bedingt durch ihre speziellen Vorsprungteile - eine hervorragende die Schallausbreitung in der Umfangsrille unterdrückende Wirkung auf.

Gemäß einer bevorzugten Ausführung ist der zentrale Vorsprungteil in radialer Richtung durch eine parallel zur Laufstreifenperipherie verlaufende, kreisförmige Plateaufläche zentrisch abgeflacht. Eine derartige Abflachung des zentralen Vorsprungteiles ist für das Wasserdrainagevermögen besonders günstig.

Eine weitere bevorzugte Ausführung besteht darin, dass der zentrale Vorsprungteil in jeder Erstreckungsrichtung der Umfangsrille durch eine zum Rillengrund verlaufende Stirnfläche begrenzt ist, welche ein Teilstück der Oberfläche des Ovoids bzw. des Ellipsoids bildet. Diese Stirnflächen sind für die erwähnte verwirbelungsarme Wasser Um- und Überströmung des zentralen Vorsprungteils von weiterem Vorteil.

Bei der letztgenannten bevorzugten Ausführung ist es von Vorteil, wenn jede Stirnfläche, im in der ersten Symmetrieebene verlaufenden Querschnitt betrachtet, bezogen auf eine die Enden der Stirnfläche verbindende, gerade Hilfslinie, zur radialen Richtung unter einem Winkel von 30° bis 50°, insbesondere von 35° bis 45°, verläuft. Dies trägt zusätzlich zu einer verwirbelungsarmen Überströmung des Vorsprunges mit Wasser bei.

Gemäß einer weiteren bevorzugten Ausführung weist der Vorsprung in der zweiten Symmetrieebene eine in die Laufstreifenperipherie projizierte maximale Breite von 50% bis 85%, insbesondere von 65% bis 75%, der in Draufsicht quer zur Erstreckungsrichtung der Umfangsrille an der Laufstreifenperipherie ermittelten Breite der Umfangsrille auf. Dies trägt zur weiteren Verbesserung des Wasserdrainagevermögens in der Umfangsrille im Bereich des Vorsprunges bei.

Die nachfolgend erwähnten bevorzugten Ausführungsformen betreffen die Abmessungen des Vorsprunges. Diese Ausführungsformen sind beliebig miteinander kombinierbar und im Hinblick auf den zwischen der die Schallausbreitung der Vorsprünge unterdrückenden Wirkung und dem Wasserdrainagevermögen der Umfangsrille bestehenden Zielkonflikt vorteilhaft.

Eine erste Ausführungsform ist dadurch gekennzeichnet, dass der zentrale Vorsprungteil in der ersten Symmetrieebene, in Draufsicht betrachtet, eine am Niveau der Profiltiefe ermittelte maximale Länge von 10,0 mm bis 15,0 mm aufweist.

Eine zweite Ausführungsform besteht darin, dass der zentrale Vorsprungteil gegenüber dem Niveau der Profiltiefe eine in radialer Richtung ermittelte maximale Höhe von 25% bis 55%, insbesondere von 30% bis 50%, bevorzugt von 35% bis 45% der Profiltiefe aufweist.

Gemäß einer dritten Ausführungsform weist der zentrale Vorsprungteil in der zweiten Symmetrieebene, in Draufsicht betrachtet, eine am Niveau der Plateaufläche ermittelte Breite von 30% bis 55%, insbesondere von 35% bis 50%, der in Draufsicht quer zur Erstreckungsrichtung der Umfangsrille an der Laufstreifenperipherie ermittelten Breite der Umfangsrille auf.

Ferner ist es vorteilhaft, wenn die seitlichen Vorsprungteile von den Rillenflanken beabstandet, insbesondere in Draufsicht senkrecht zur ersten Symmetrieebene ermittelt zur jeweils nächstliegenden Rillenflanke übereinstimmend beabstandet, sind. Dies ist insbesondere für das Wasserdrainagevermögen im Bereich des Vorsprunges günstig, weil Wasser an beiden Seiten des Vorsprunges gleichermaßen vorbeigeleitet wird.

Gemäß einer weiteren bevorzugten Ausführung ist jeder seitliche Vorsprungteil von einer einzigen, nach außen gewölbten Fläche begrenzt. Dies trägt dazu bei, dass die seitlichen Vorsprungteile auf besonders verwirbelungsarme Weise von Wasser um- und überströmt werden.

Bei der letztgenannten bevorzugten Ausführung ist es von Vorteil, wenn die nach außen gewölbte Fläche, im in der zweiten Symmetrieebene liegenden Querschnitt betrachtet, bezogen auf eine die Enden der nach außen gewölbten Fläche verbindende gerade Hilfslinie, zur radialen Richtung unter einem Winkel von 30° bis 50°, insbesondere von 35° bis 45°, verläuft.

Gemäß den zwei nachfolgenden, kombinierbaren, weiteren bevorzugten Ausführungsformen weisen die seitlichen Vorsprungteile auf den zentralen Vorsprungteil speziell abgestimmte Abmessungen auf. Dies trägt zur Aufrechterhaltung der die Schallausbreitung unterdrückenden Wirkung bei und ist ferner für das Wasserdrainagevermögen der Umfangsrille vorteilhaft.

Eine dieser Ausführungsformen ist dadurch gekennzeichnet, dass jeder seitliche Vorsprungteil, in Draufsicht betrachtet, eine in Erstreckungsrichtung der Umfangsrille am Niveau des Rillengrundes ermittelte maximale Länge von 20% bis 35%, insbesondere von 26% bis 32%, der maximalen Länge des zentralen Vorsprungteiles aufweist.

Eine zweite dieser Ausführungsformen ist dadurch gekennzeichnet, dass jeder seitliche Vorsprungteil gegenüber dem Niveau der Profiltiefe eine in radialer Richtung ermittelte maximale Höhe von 60% bis 100%, insbesondere von 70% bis 90%, bevorzugt von 75% bis 85% der maximalen Höhe des zentralen Vorsprungteiles aufweist.

Ferner ist es insbesondere für das Wasserdrainagevermögen günstig, wenn jeder seitliche Vorsprungteil ein Volumen aufweist, welches 10% bis 25% des Volumens des zentralen Vorsprungteiles beträgt.

Eine weitere bevorzugte Ausführungsform ist dadurch gekennzeichnet, dass innerhalb der Umfangsrille drei bis zwanzig, bevorzugt mindestens fünfzehn, Vorsprünge ausgebildet sind, wobei die Anordnung der Vorsprünge insbesondere derart ist, dass aufeinanderfolgende Vorsprünge voneinander in Umfangsrichtung ermittelte, übereinstimmende oder um bis zu 20,0 mm untereinander abweichende Abstände aufweisen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Schrägansicht auf einen Ausschnitt eines Laufstreifens eines Fahrzeugluftreifens im Bereich einer Umfangsrille mit einer Ausführungsvariante der Erfindung,
Fig. 2 eine Draufsicht auf den Teil des Ausschnittes aus Fig. 1,
Fig. 3 einen Schnitt entlang der Linie III-III der Fig. 2 und
Fig. 4 einen Schnitt entlang der Linie IV-IV der Fig. 2.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (leichte LKWs mit zGM ≤ 7,5 t).

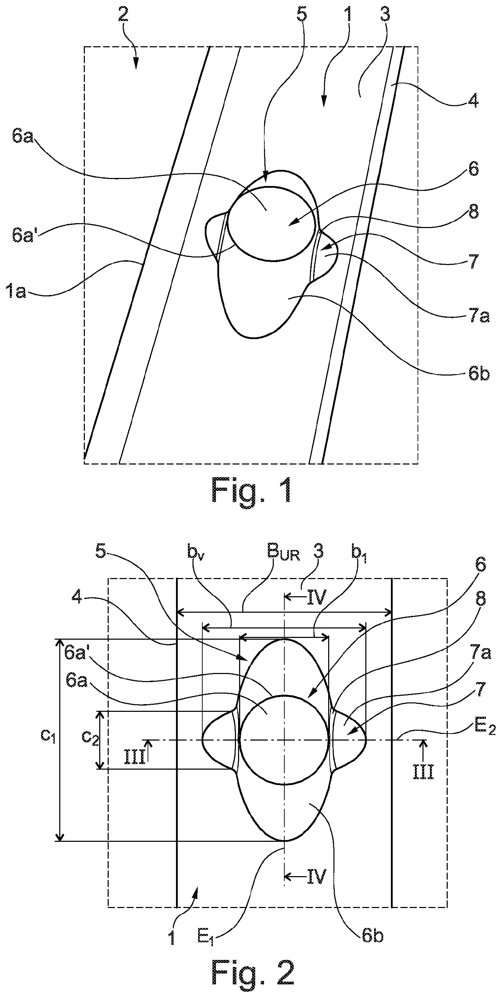

Fig. 1 zeigt eine Schrägansicht auf einen Ausschnitt eines Laufstreifens eines Fahrzeugluftreifens im Bereich einer in Draufsicht gerade verlaufenden und in Umfangsrichtung umlaufenden Umfangsrille 1, welche Profilpositive 2, beispielsweise Profilbänder, voneinander trennt. Die nicht gezeigten Bereiche des Laufstreifens können in bekannter Weise ausgeführt sein.

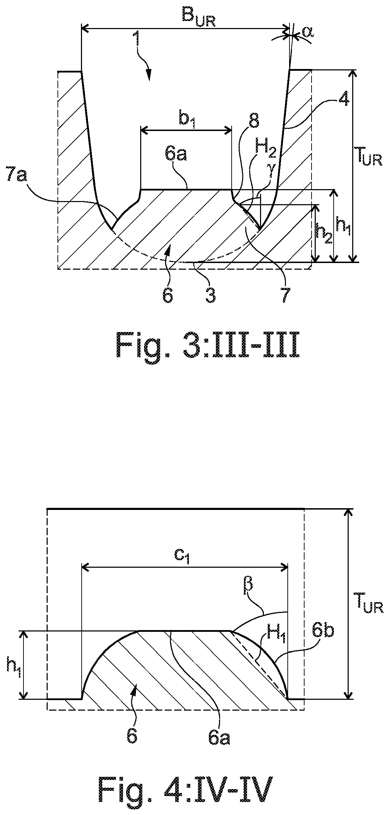

Die Umfangsrille 1 ist in radialer Richtung in der für den jeweiligen Reifentyp vorgesehenen Profiltiefe T_{UR} (Fig. 3, Fig. 4) ausgeführt, welche für PKWs, Vans und Light-Trucks üblicherweise 6,5 mm bis 13,0 mm beträgt, und weist an der Laufstreifenperipherie in axialer Richtung eine Breite B_{UR} (Fig. 2, Fig. 3) von insbesondere 6,0 mm bis 10,0 mm, ferner einen U-förmigen Querschnitt (Fig. 3) sowie zwei an der Laufstreifenperipherie liegende, in Draufsicht gerade in Umfangsrichtung verlaufende Rillenkanten 1a auf. Die Umfangsrille 1 ist durch einen Rillengrund 3 sowie zwei Rillenflanken 4 begrenzt. Gemäß Fig. 3 verläuft der Rillengrund 3, im in Draufsicht in axialer Richtung ausgerichteten Querschnitt betrachtet (vergl. Lage der Linie III-III in Fig. 2), bogenförmig. Die Rillenflanken 4 verlaufen, im erwähnten Querschnitt betrachtet, gerade sowie zur radialen Richtung jeweils unter einem Winkel α von 0° bis 15°, insbesondere von 3° bis 10°.

Wie Fig. 1 in Kombination mit Fig. 2 zeigt, ist im gezeigten Abschnitt der Umfangsrille 1 ein am Rillengrund 3 aufsitzender, von den Rillenflanken 4 in axialer Richtung übereinstimmend beabstandeter, in Draufsicht (Fig. 2) in Umfangsrichtung langgestreckter, lokaler Vorsprung 5 ausgebildet. Der Vorsprung 5 wirkt als "Schallbrecher" und reduziert im Fahrbetrieb die Geräuschabstrahlung des Reifens, insbesondere im Frequenzbereich um 1000 Hz. Innerhalb der Umfangsrille 1 ist eine Vielzahl von Vorsprüngen 5 vorgesehen, wobei insbesondere drei bis zwanzig, bevorzugt mindestens fünfzehn, Vorsprünge 5 vorgesehen sind. Die Anordnung der Vorsprünge 5 ist derart, dass aufeinanderfolgende Vorsprünge 5 voneinander in Umfangsrichtung ermittelte, übereinstimmende oder um höchstens bis zu 20,0 mm voneinander abweichende Abstände aufweisen. Die Differenz zwischen dem größten Abstand und dem kleinsten Abstand beträgt also höchstens 20,0 mm.

Der Vorsprung 5 weist eine in Draufsicht in Umfangsrichtung verlaufende Symmetrieebene E₁ (Fig. 2) sowie eine in Draufsicht in axialer Richtung verlaufende Symmetrieebene E₂ (Fig. 2) auf und setzt sich aus einem zentralen Vorsprungteil 6 und zwei den verschiedenen Rillenflanken 4 zugewandten, nasenförmigen, seitlichen Vorsprungteilen 7 zusammen. Die Symmetrieebene E₁ ist daher von der Umfangsrichtung und der radialen Richtung aufgespannt und die Symmetrieebene E₂ ist somit von der axialen Richtung und der radialen Richtung aufgespannt. Der Vorsprung 5 weist in der Symmetrieebene E₂ eine in die Laufstreifenperipherie projizierte, in axialer Richtung ermittelte maximale Breite bv (Breite an der breitesten Stelle, Fig. 2) von 50% bis 85%, insbesondere von 65% bis 75%, der Breite B_{UR} (Fig. 2) der Umfangsrille 1 auf.

Der zentrale Vorsprungteil 6 ist bezüglich der Symmetrieebenen E₁, E₂ (Fig. 2) symmetrisch, weist, in Draufsicht betrachtet und unter Vernachlässigung der seitlichen Vorsprungteile 7, eine in Umfangsrichtung langgestreckt elliptische Form (Fig. 2) sowie insgesamt die Gestalt eines Teilstückes eines in radialer Richtung zentrisch abgeflachten Ellipsoids auf. Der zentrale Vorsprungteil 6 ist in radialer Richtung durch eine parallel zur Laufstreifenperipherie verlaufende, in Draufischt kreisförmige Plateaufläche 6a (vergl. Fig. 3, Fig. 4) und in jeder Umfangsrichtung jeweils durch eine zwischen dem Rillengrund 3 und der Plateaufläche 6a verlaufende Stirnfläche 6b (vergl. Fig. 4), welche ein Teilstück der Oberfläche eines Ellipsoids ist, begrenzt.

Die Plateaufläche 6a ist von einer kreisringförmig umlaufenden, scharfen Kante 6a' begrenzt und flacht den zentralen Vorsprungteil 6 zentrisch ab.

Gemäß Fig. 4 verläuft jede Stirnfläche 6b, im in der Symmetrieebene E₁ liegenden Querschnitt betrachtet (vergl. Lage der Linie IV-IV in Fig. 2), bezogen auf eine die Enden der Stirnfläche 6b verbindende, gerade Hilfslinie H₁, zur radialen Richtung unter einem Winkel β von 30° bis 50°, insbesondere von 35° bis 45°.

Gemäß Fig. 2 bis Fig. 4 weist der zentrale Vorsprungteil 6 in der Symmetrieebene E₁ (Fig. 2) eine in Umfangsrichtung am Niveau der Profiltiefe T_{UR} (Fig. 4) ermittelte maximale Länge c₁ (Länge an der längsten Stelle, Fig. 2, Fig. 4) von 10,0 mm bis 15,0 mm, in der Symmetrieebene E₂ (Fig. 2) eine in axialer Richtung am Niveau der Plateaufläche 6a ermittelte Breite b₁ (Fig. 2, Fig. 3) von 30% bis 55%, insbesondere von 35% bis 50%, der Breite B_{UR} (Fig. 2, Fig. 3) der Umfangsrille 1 sowie eine gegenüber dem Niveau der Profiltiefe T_{UR} (Fig. 3, Fig. 4) in radialer Richtung ermittelte, auf die Plateaufläche 6a bezogene maximale Höhe h₁ (Höhe an der höchsten Stelle, Fig. 3, Fig. 4) von 25% bis 55%, insbesondere von 30% bis 50%, bevorzugt von 35% bis 45% der Profiltiefe T_{UR} (Fig.3, Fig. 4) auf.

Wie Fig. 2 ferner zeigt, sind die seitlichen Vorsprungteile 7 jeweils bezüglich der Symmetrieebene E₂ symmetrisch ausgeführt, wobei der eine seitliche Vorsprungteil 7 zum anderen seitlichen Vorsprungteil 7 bezüglich der Symmetrieebene E₁ symmetrisch positioniert ist und wobei jeder seitliche Vorsprungteil 7 gegenüber dem zentralen Vorsprungteil 6 ein kleineres Volumen aufweist.

Jeder seitliche Vorsprungteil 7 ist ferner von einer einzigen, gerundeten, daher in ihrem Inneren von Kanten freien, nach außen gewölbten Fläche 7a (vergl. Fig. 1) begrenzt, welche in der Symmetrieebene E₂ ausgehend vom zentralen Vorsprungteil 6 in Richtung Rillengrund 3 abfällt und an diesem endet (Fig. 3). Jeder seitliche Vorsprungteil 7 weist somit einen ausgehend vom zentralen Vorsprungteil 6 in Richtung zum Rillengrund 3 abfallenden Nasenrücken auf. Der Nasenrücken ist daher der in der Symmetrieebene E₂ liegende Teil der Fläche 7a (Fig. 3). Gemäß Fig. 3 ist die Fläche 7a, im in der Symmetrieebene E₂ liegenden Querschnitt betrachtet (vergl. Lage der Linie III-III in Fig. 2), derart durchgehend bogenförmig nach außen gewölbt, dass eine die Enden der Fläche 7a verbindende gerade Hilfslinie H₂ innerhalb des seitlichen Vorsprungteiles 7 liegt, wobei die Fläche 7a - bezogen auf die Hilfslinie H₂ - zur radialen Richtung unter einem Winkel γ von 30° bis 50°, insbesondere von 35° bis 45°, verläuft.

Die seitlichen Vorsprungteile 7 weisen jeweils eine in Umfangsrichtung am Niveau des Rillengrundes 3 ermittelte maximale Länge c₂ (Länge an der längsten Stelle, Fig. 2) von 20% bis 35%, insbesondere von 26% bis 32%, der maximalen Länge c₁ (Fig. 2) des zentralen Vorsprungteiles 6 sowie eine gegenüber dem Niveau der Profiltiefe T_{UR} in radialer Richtung ermittelte maximale Höhe h₂ (Höhe an der höchsten Stelle, Fig. 3) von 60% bis 100%, insbesondere von 70% bis 90%, besonders bevorzugt von 75% bis 85%, der maximalen Höhe h₁ (Fig. 3) des zentralen Vorsprungteiles 6 auf. Bevorzugter Weise weist jeder seitliche Vorsprungteil 7 ein Volumen auf, welches 10% bis 25% des Volumens des zentralen Vorsprungteiles 6 beträgt.

Beim gezeigten Ausführungsbeispiel ist zwischen den Flächen 7a der seitlichen Vorsprungteile 7 und den Stirnflächen 6b des zentralen Vorsprungteiles 6 jeweils eine kreisbogenförmig verlaufende Übergangsrundung 8 (Fig. 1 bis Fig. 3) ausgebildet, deren beiden Enden am Rillengrund 3 liegen (Fig. 1). Bei der Ermittlung der entsprechenden, erwähnten Abmessungen (Höhe h₂ und Länge c₂ der seitlichen Vorsprungteile 7) bleibt die Übergangsrundung 8 unberücksichtigt (Fig. 2, Fig. 3).

Die Erfindung ist auf das beschriebene Ausführungsbeispiel nicht beschränkt.

Die Vorsprünge können jeweils an eine oder an beide Rillenflanke(n) angebunden sein. Ferner können die Vorsprünge jeweils die Form eines Teilstückes eines beliebigen, zentrisch abgeflachten Ovoids aufweisen. Die Plateaufläche kann eine von der beschriebenen Form abweichende Form aufweisen. Der Laufstreifen weist zumindest eine Umfangsrille auf, in welcher sich die Vorsprünge befinden. Bevorzugter Weise sind die Vorsprünge in jeder Umfangsrille des Laufstreifens ausgebildet. Vorsprünge, welche sich in zueinander axial benachbart verlaufenden Umfangsrillen befinden, sind bevorzugt derart positioniert, dass die Vorsprünge aus der einen Umfangsrille zu den Vorsprüngen aus der jeweils benachbarten, anderen Umfangsrille in Umfangsrichtung versetzt sind.

Die die Vorsprünge enthaltenden Umfangsrille(n) kann bzw. können, in Draufsicht betrachtet, auch zick-zack-förmig oder wellenförmig verlaufen, wobei diese Umfangsrille(n) vorzugsweise einen "lookthrough" aufweisen, d.h., dass, im in Draufsicht in axialer Richtung ausgerichteten Querschnitt betrachtet, eine Durchsicht durch die Umfangsrille(n) möglich ist.

Eine zick-zack-förmig verlaufende Umfangsrille setzt sich aus in Umfangsrichtung aufeinanderfolgenden, in Draufsicht jeweils gerade verlaufenden Umfangsrillenabschnitten zusammen. Die Vorsprünge in zick-zack-förmig verlaufenden Umfangsrillen weisen eine erste Symmetrieebene auf, welche, in Draufsicht betrachtet, in Erstreckungsrichtung der Umfangsrille, also in Erstreckungsrichtung des jeweiligen Umfangsrillenabschnittes, verläuft. Ferner weisen solche Vorsprünge eine zweite Symmetrieebene auf, welche, in Draufsicht betrachtet, senkrecht zur ersten Symmetrieebene verläuft. Die erste Symmetrieebene ist daher von der Erstreckungsrichtung des jeweiligen Umfangsrillenabschnittes und der radialen Richtung aufgespannt. Die zweite Symmetrieebene ist somit von einer in Draufsicht senkrecht zur ersten Symmetrieebene verlaufenden Geraden und der radialen Richtung aufgespannt. Die Breite der zick-zack-förmig verlaufenden Umfangsrille ist in Draufsicht quer zur Erstreckungsrichtung der Umfangsrille sowie an der Laufstreifenperipherie ermittelt.

**In** wellenförmig verlaufenden Umfangsrillen ausgebildete Vorsprünge sind übereinstimmend zu Vorsprüngen ausgeführt, welche sich in in Draufsicht gerade verlaufenden Umfangsrillen befinden. Die Erstreckungsrichtung einer wellenförmig verlaufenden Umfangsrille ist daher die exakte Umfangsrichtung.

### Bezugszeichenliste

- 1: Umfangsrille
- 1a: Rillenkante
- 2: Profilpositiv
- 3: Rillengrund
- 4: Rillenflanke
- 5: Vorsprung
- 6: zentraler Vorsprungteil
- 6a: Plateaufläche
- 6a: Kante
- 6b: Stirnfläche
- 7: seitlicher Vorsprungteil
- 7a: Fläche
- 8: Übergangsrundung
- b₁,B_{UR}: Breite
- b_{V}: maximale Breite
- c₁, c2: maximale Länge
- E₁, E₂: Symmetrieebene
- h₁, h₂: Höhe
- H₁, H₂: Hilfslinie
- T_{UR}: Profiltiefe
- α, β, γ: Winkel

## Patentansprüche

1. Fahrzeugluftreifen mit einem profilierten Laufstreifen mit zumindest einer in Draufsicht insbesondere gerade in Umfangsrichtung verlaufenden Umfangsrille (1) mit einem Rillengrund (3) und zwei Rillenflanken (4), wobei am Rillengrund (3) über den Umfang des Laufstreifens verteilt angeordnete, als Schallbrecher wirkende Vorsprünge (5) ausgebildet sind, wobei jeder Vorsprung (5) eine in Draufsicht in Erstreckungsrichtung der Umfangsrille (1) verlaufende erste Symmetrieebene (E₁) sowie eine in Draufsicht senkrecht zur ersten Symmetrieebene (E₁) verlaufende zweite Symmetrieebene (E₂) aufweist und wobei sich jeder Vorsprung (5) aus einem mittig in der Umfangsrille (1) ausgebildeten, zentralen Vorsprungteil (6) und zwei den Rillenflanken (4) zugewandten seitlichen Vorsprungteilen (7) zusammensetzt,
**dadurch gekennzeichnet,**
**dass** der zentrale Vorsprungteil (6), in Draufsicht betrachtet, eine in Erstreckungsrichtung der ersten Symmetrieebene (E₁) langgestreckt ovale Form, insbesondere eine in Erstreckungsrichtung der ersten Symmetrieebene (E₁) langgestreckt elliptische Form, aufweist und
in Gestalt eines Teilstückes eines in radialer Richtung zentrisch abgeflachten Ovoids, insbesondere eines Ellipsoids, ausgeführt ist,
wobei die seitlichen Vorsprungteile (7) gegenüber dem zentralen Vorsprungteil (6) jeweils ein kleineres Volumen aufweisen, nasenförmig ausgebildet sind und einen ausgehend vom zentralen Vorsprungteil (6) abfallenden Nasenrücken aufweisen.

2. Fahrzeugluftreifen nach Anspruch 1, **dadurch gekennzeichnet, dass** der zentrale Vorsprungteil (6) in radialer Richtung durch eine parallel zur Laufstreifenperipherie verlaufende, kreisförmige Plateaufläche (6a) zentrisch abgeflacht ist.

3. Fahrzeugluftreifen nach Anspruch 1 oder 2, **dadurch gekennzeichnet, dass** der zentrale Vorsprungteil (6) in jeder Erstreckungsrichtung der Umfangsrille (1) durch eine zum Rillengrund (3) verlaufende Stirnfläche (6b) begrenzt ist, welche ein Teilstück der Oberfläche des Ovoids bzw. des Ellipsoids bildet.

4. Fahrzeugluftreifen nach Anspruch 3, **dadurch gekennzeichnet, dass** jede Stirnfläche (6b), im in der ersten Symmetrieebene (E₁) verlaufenden Querschnitt betrachtet, bezogen auf eine die Enden der Stirnfläche (6b) verbindende, gerade Hilfslinie (H₁), zur radialen Richtung unter einem Winkel (β) von 30° bis 50°, insbesondere von 35° bis 45°, verläuft.

5. Fahrzeugluftreifen nach einem der Ansprüche 1 bis 4, **dadurch gekennzeichnet, dass** der Vorsprung (5) in der zweiten Symmetrieebene (E₂) eine in die Laufstreifenperipherie projizierte maximale Breite (bv) von 50% bis 85%, insbesondere von 65% bis 75%, der in Draufsicht quer zur Erstreckungsrichtung der Umfangsrille (1) an der Laufstreifenperipherie ermittelten Breite (B_{UR}) der Umfangsrille (1) aufweist.

6. Fahrzeugluftreifen nach einem der Ansprüche 1 bis 5, **dadurch gekennzeichnet, dass** der zentrale Vorsprungteil (6) in der ersten Symmetrieebene (E₁), in Draufsicht betrachtet, eine am Niveau der Profiltiefe (T_{UR}) ermittelte maximale Länge (c₁) von 10,0 mm bis 15,0 mm aufweist.

7. Fahrzeugluftreifen nach einem der Ansprüche 1 bis 6, **dadurch gekennzeichnet, dass** der zentrale Vorsprungteil (6) gegenüber dem Niveau der Profiltiefe (T_{UR}) eine in radialer Richtung ermittelte maximale Höhe (h₁) von 25% bis 55%, insbesondere von 30% bis 50%, bevorzugt von 35% bis 45% der Profiltiefe (T_{UR}) aufweist.

8. Fahrzeugluftreifen nach einem der Ansprüche 2 bis 7, **dadurch gekennzeichnet, dass** der zentrale Vorsprungteil (6) in der zweiten Symmetrieebene (E₂), in Draufsicht betrachtet, eine am Niveau der Plateaufläche (6a) ermittelte Breite (b₁) von 30% bis 55%, insbesondere von 35% bis 50%, der in Draufsicht quer zur Erstreckungsrichtung der Umfangsrille (1) an der Laufstreifenperipherie ermittelten Breite (B_{UR}) der Umfangsrille (1) aufweist.

9. Fahrzeugluftreifen nach einem der Ansprüche 1 bis 8, **dadurch gekennzeichnet, dass** die seitlichen Vorsprungteile (7) von den Rillenflanken (4) beabstandet, insbesondere in Draufsicht senkrecht zur ersten Symmetrieebene (E₁) ermittelt zur jeweils nächstliegenden Rillenflanke (4) übereinstimmend beabstandet, sind.

10. Fahrzeugluftreifen nach einem der Ansprüche 1 bis 9, **dadurch gekennzeichnet, dass** jeder seitliche Vorsprungteil (7) von einer einzigen, nach außen gewölbten Fläche (7a) begrenzt ist.

11. Fahrzeugluftreifen nach Anspruch 10, **dadurch gekennzeichnet, dass** die nach außen gewölbte Fläche (7a), im in der zweiten Symmetrieebene (E₂) liegenden Querschnitt betrachtet, bezogen auf eine die Enden der nach außen gewölbten Fläche (7a) verbindende gerade Hilfslinie (H₂), zur radialen Richtung unter einem Winkel (γ) von 30° bis 50°, insbesondere von 35° bis 45°, verläuft.

12. Fahrzeugluftreifen nach einem der Ansprüche 6 bis 11, **dadurch gekennzeichnet, dass** jeder seitliche Vorsprungteil (7), in Draufsicht betrachtet, eine in Erstreckungsrichtung der Umfangsrille (1) am Niveau des Rillengrundes (3) ermittelte maximale Länge (c₂) von 20% bis 35%, insbesondere von 26% bis 32%, der maximalen Länge (c₁) des zentralen Vorsprungteiles (6) aufweist.

13. Fahrzeugluftreifen nach einem der Ansprüche 7 bis 12, **dadurch gekennzeichnet, dass** jeder seitliche Vorsprungteil (7) gegenüber dem Niveau der Profiltiefe (T_{UR}) eine in radialer Richtung ermittelte maximale Höhe (h₂) von 60% bis 100%, insbesondere von 70% bis 90%, bevorzugt von 75% bis 85% der maximalen Höhe (h₁) des zentralen Vorsprungteiles (6) aufweist.

14. Fahrzeugluftreifen nach einem der Ansprüche 1 bis 13, **dadurch gekennzeichnet, dass** jeder seitliche Vorsprungteil (7) ein Volumen aufweist, welches 10% bis 25% des Volumens des zentralen Vorsprungteiles (6) beträgt.

15. Fahrzeugluftreifen nach einem der Ansprüche 1 bis 14, **dadurch gekennzeichnet, dass** innerhalb der Umfangsrille (1) drei bis zwanzig, bevorzugt mindestens fünfzehn, Vorsprünge (5) ausgebildet sind, wobei die Anordnung der Vorsprünge (5) insbesondere derart ist, dass aufeinanderfolgende Vorsprünge (5) voneinander in Umfangsrichtung ermittelte, übereinstimmende oder um bis zu 20,0 mm untereinander abweichende Abstände aufweisen.

## Claims

1. Pneumatic vehicle tyre having a profiled tread with at least one circumferential channel (1) which extends in particular straight in a circumferential direction in plan view and which has a channel base (3) and has two channel flanks (4), wherein, on the channel base (3), there are formed protrusions (5) which are arranged so as to be distributed over the circumference of the tread and which act as sound absorbers, wherein each protrusion (5) has a first plane of symmetry (E₁), which extends in the direction of extent of the circumferential channel (1) in plan view, and a second plane of symmetry (E₂), which extends perpendicularly to the first plane of symmetry (E₁) in plan view, and wherein each protrusion (5) is made up of a central protrusion part (6), which is formed centrally in the circumferential channel (1), and two lateral protrusion parts (7), which face towards the channel flanks (4),
**characterized**
**in that** the central protrusion part (6), when seen in plan view, has an oval shape which is elongate in the direction of extent of the first plane of symmetry (E₁), in particular has an elliptical shape which is elongate in the direction of extent of the first plane of symmetry (E₁), and
is in the form of a portion of an ovoid, in particular ellipsoid, which is flattened centrally in a radial direction,
wherein the lateral protrusion parts (7) in each case have a smaller volume in comparison with the central protrusion part (6), are of nose-shaped form and have a nose ridge which descends from the central protrusion part (6).

2. Pneumatic vehicle tyre according to Claim 1, **characterized in that** the central protrusion part (6) is flattened centrally in the radial direction by a circular plateau surface (6a) which extends parallel to the tread periphery.

3. Pneumatic vehicle tyre according to Claim 1 or 2, **characterized in that** the central protrusion part (6) is delimited in each direction of extent of the circumferential channel (1) by an end surface (6b) which extends to the channel base (3) and which forms a portion of the surface of the ovoid or of the ellipsoid.

4. Pneumatic vehicle tyre according to Claim 3, **characterized in that**, when seen in the cross section in the first plane of symmetry (E₁), each end surface (6b) extends at an angle (β) of 30° to 50°, in particular of 35° to 45°, to the radial direction on the basis of a straight reference line (H₁) which connects the ends of the end surface (6b).

5. Pneumatic vehicle tyre according to one of Claims 1 to 4, **characterized in that**, in the second plane of symmetry (E₂), the protrusion (5) has a maximum width (b_{V}), when projected into the tread periphery, of 50% to 85%, in particular of 65% to 75%, of the width (B_{UR}), determined at the tread periphery transversely to the direction of extent of the circumferential channel (1) in plan view, of the circumferential channel (1).

6. Pneumatic vehicle tyre according to one of Claims 1 to 5, **characterized in that**, in the first plane of symmetry (E₁), the central protrusion part (6), when seen in plan view, has a maximum length (c₁), determined at the level of the profile depth (T_{UR}), of 10.0 mm to 15.0 mm.

7. Pneumatic vehicle tyre according to one of Claims 1 to 6, **characterized in that**, in relation to the level of the profile depth (T_{UR}), the central protrusion part (6) has a maximum height (h₁), determined in the radial direction, of 25% to 55%, in particular of 30% to 50%, preferably of 35% to 45%, of the profile depth (T_{UR}).

8. Pneumatic vehicle tyre according to one of Claims 2 to 7, **characterized in that**, in the second plane of symmetry (E₂), the central protrusion part (6), when seen in plan view, has a width (b₁), determined at the level of the plateau surface (6a), of 30% to 55%, in particular of 35% to 50%, of the width (B_{UR}), determined at the tread periphery transversely to the direction of extent of the circumferential channel (1) in plan view, of the circumferential channel (1).

9. Pneumatic vehicle tyre according to one of Claims 1 to 8, **characterized in that** the lateral protrusion parts (7) are spaced apart from the channel flanks (4), in particular are spaced apart correspondingly from the in each case nearest channel flank (4) as determined perpendicularly to the first plane of symmetry (E₁) in plan view.

10. Pneumatic vehicle tyre according to one of Claims 1 to 9, **characterized in that** each lateral protrusion part (7) is delimited by a single outwardly arched surface (7a).

11. Pneumatic vehicle tyre according to Claim 10, **characterized in that**, when seen in the cross section in the second plane of symmetry (E₂), the outwardly arched surface (7a) extends at an angle (γ) of 30° to 50°, in particular of 35° to 45°, to the radial direction on the basis of a straight reference line (H₂) which connects the ends of the outwardly arched surface (7a).

12. Pneumatic vehicle tyre according to one of Claims 6 to 11, **characterized in that** each lateral protrusion part (7), when seen in plan view, has a maximum length (c₂), determined at the level of the channel base (3) in the direction of extent of the circumferential channel (1), of 20% to 35%, in particular of 26% to 32%, of the maximum length (c₁) of the central protrusion part (6).

13. Pneumatic vehicle tyre according to one of Claims 7 to 12, **characterized in that**, in relation to the level of the profile depth (T_{UR}), each lateral protrusion part (7) has a maximum height (h₂), determined in the radial direction, of 60% to 100%, in particular of 70% to 90%, preferably of 75% to 85%, of the maximum height (h₁) of the central protrusion part (6).

14. Pneumatic vehicle tyre according to one of Claims 1 to 13, **characterized in that** each lateral protrusion part (7) has a volume which is 10% to 25% of the volume of the central protrusion part (6).

15. Pneumatic vehicle tyre according to one of Claims 1 to 14, **characterized in that** three to twenty, preferably at least fifteen, protrusions (5) are formed within the circumferential channel (1), wherein the arrangement of the protrusions (5) is in particular such that successive protrusions (5) are at distances, determined in the circumferential direction, from one another that correspond or differ from one another by up to 20.0 mm.

## Revendications

1. Pneu de véhicule, avec une bande de roulement profilée avec au moins une rainure circonférentielle (1) s'étendant notamment de manière rectiligne dans la direction circonférentielle en vue de dessus, avec un fond de rainure (3) et deux flancs de rainure (4), des saillies (5) agissant comme brise-sons, agencées réparties sur la circonférence de la bande de roulement, étant réalisées sur le fond de rainure (3), chaque saillie (5) présentant un premier plan de symétrie (E₁) s'étendant en vue de dessus dans la direction d'extension de la rainure circonférentielle (1) ainsi qu'un deuxième plan de symétrie (E₂) s'étendant en vue de dessus perpendiculairement au premier plan de symétrie (E₁), et chaque saillie (5) se composant d'une partie de saillie centrale (6) réalisée au centre dans la rainure circonférentielle (1) et de deux parties de saillie latérales (7) tournées vers les flancs de rainure (4),
**caractérisé**
**en ce que** la partie de saillie centrale (6), considérée en vue de dessus, présente une forme ovale allongée dans la direction d'extension du premier plan de symétrie (E₁), notamment une forme elliptique allongée dans la direction d'extension du premier plan de symétrie (E₁), et
est conçue sous la forme d'une portion d'un ovoïde aplati dans la direction radiale au centre, notamment d'un ellipsoïde,
les parties de saillie latérales (7) présentant chacune un volume plus petit que la partie de saillie centrale (6), étant réalisées en forme d'ergot et présentant un pont d'ergot descendant à partir de la partie de saillie centrale (6).

2. Pneu de véhicule selon la revendication 1, **caractérisé en ce que** la partie de saillie centrale (6) est aplatie dans la direction radiale au centre par une surface de plateau circulaire (6a) s'étendant parallèlement à la périphérie de la bande de roulement.

3. Pneu de véhicule selon la revendication 1 ou 2, **caractérisé en ce que** la partie de saillie centrale (6) est délimitée dans chaque direction d'extension de la rainure circonférentielle (1) par une surface frontale (6b) s'étendant vers le fond de rainure (3), laquelle forme une portion de la surface de l'ovale ou de l'ellipsoïde.

4. Pneu de véhicule selon la revendication 3, **caractérisé en ce que** chaque surface frontale (6b), considérée dans la section transversale s'étendant dans le premier plan de symétrie (E₁), par rapport à une ligne auxiliaire droite (H₁) reliant les extrémités de la surface frontale (6b), s'étend selon un angle (β) de 30° à 50°, notamment de 35° à 45°, par rapport à la direction radiale.

5. Pneu de véhicule selon l'une quelconque des revendications 1 à 4, **caractérisé en ce que** la saillie (5) présente dans le deuxième plan de symétrie (E₂) une largeur maximale (bv) projetée dans la périphérie de la bande de roulement de 50 % à 85 %, notamment de 65 % à 75 %, de la largeur (B_{UR}) de la rainure circonférentielle (1) déterminée en vue de dessus transversalement à la direction d'extension de la rainure circonférentielle (1) à la périphérie de la bande de roulement.

6. Pneu de véhicule selon l'une quelconque des revendications 1 à 5, **caractérisé en ce que** la partie de saillie centrale (6) présente, dans le premier plan de symétrie (E₁), considérée en vue de dessus, une longueur maximale (c₁) déterminée au niveau de la profondeur de profil (T_{UR}) de 10,0 mm à 15,0 mm.

7. Pneu de véhicule selon l'une quelconque des revendications 1 à 6, **caractérisé en ce que** la partie de saillie centrale (6) présente, par rapport au niveau de la profondeur de profil (T_{UR}), une hauteur maximale (h₁) déterminée dans la direction radiale de 25 % à 55 %, notamment de 30 % à 50 %, de préférence de 35 % à 45 % de la profondeur de profil (T_{UR}).

8. Pneu de véhicule selon l'une quelconque des revendications 2 à 7, **caractérisé en ce que** la partie de saillie centrale (6) présente, dans le deuxième plan de symétrie (E₂), considérée en vue de dessus, une largeur (b₁) déterminée au niveau de la surface de plateau (6a) de 30 % à 55 %, notamment de 35 % à 50 %, de la largeur (B_{UR}) de la rainure circonférentielle (1) déterminée en vue de dessus transversalement à la direction d'extension de la rainure circonférentielle (1) à la périphérie de la bande de roulement.

9. Pneu de véhicule selon l'une quelconque des revendications 1 à 8, **caractérisé en ce que** les parties de saillie latérales (7) sont espacées des flancs de rainures (4), notamment sont espacées de manière coïncidente en vue de dessus perpendiculairement au premier plan de symétrie (E₁), par rapport au flanc de rainure (4) le plus proche respectif.

10. Pneu de véhicule selon l'une quelconque des revendications 1 à 9, **caractérisé en ce que** chaque partie de saillie latérale (7) est délimitée par une seule surface (7a) bombée vers l'extérieur.

11. Pneu de véhicule selon la revendication 10, **caractérisé en ce que** la surface bombée vers l'extérieur (7a), considérée dans la section transversale située dans le deuxième plan de symétrie (E₂), par rapport à une ligne auxiliaire droite (H₂) reliant les extrémités de la surface bombée vers l'extérieur (7a), s'étend selon un angle (γ) de 30° à 50°, notamment de 35° à 45°, par rapport à la direction radiale.

12. Pneu de véhicule selon l'une quelconque des revendications 6 à 11, **caractérisé en ce que** chaque partie de saillie latérale (7), considérée en vue de dessus, présente une longueur maximale (c₂) déterminée dans la direction d'extension de la rainure circonférentielle (1) au niveau du fond de rainure (3) de 20 % à 35 %, notamment de 26 % à 32 %, de la longueur maximale (c₁) de la partie de saillie centrale (6).

13. Pneu de véhicule selon l'une quelconque des revendications 7 à 12, **caractérisé en ce que** chaque partie de saillie latérale (7) présente, par rapport au niveau de la profondeur de profil (T_{UR}), une hauteur maximale (h₂) déterminée dans la direction radiale de 60 % à 100 %, notamment de 70 % à 90 %, de préférence de 75 % à 85 % de la hauteur maximale (h₁) de la partie de saillie centrale (6).

14. Pneu de véhicule selon l'une quelconque des revendications 1 à 13, **caractérisé en ce que** chaque partie de saillie latérale (7) présente un volume qui représente 10 % à 25 % du volume de la partie de saillie centrale (6).

15. Pneu de véhicule selon l'une quelconque des revendications 1 à 14, **caractérisé en ce que** trois à vingt, de préférence au moins quinze, saillies (5) sont réalisées à l'intérieur de la rainure circonférentielle (1), l'agencement des saillies (5) étant notamment tel que des saillies successives (5) présentent des distances déterminées dans la direction circonférentielle qui coïncident ou qui divergent les unes des autres de jusqu'à 20,0 mm.
